# FASCICULE DE BREVET EUROPEEN

(11) **EP 2 483 071 B1**
(45) Date de publication et mention de la délivrance du brevet: **07.08.2013**
(21) Numéro de dépôt: 10759671.0
(22) Date de dépôt: 30.09.2010
(51) Int. Cl.: B32B 3/28, B32B 27/20, B32B 27/32, B32B 37/20, C08K 3/22

(54) **PLAQUE EN MATERIAU THERMOPLASTIQUE AVEC PROPRIETES OPTIQUES AMELIOREES PROCEDE DE FABRICATION D'UNE TELLE PLAQUE ET SON UTILISATION**
PLATTE AUS THERMOPLASTISCHEM MATERIAL MIT VERBESSERTEN OPTISCHEN EIGENSCHAFTEN, VERFAHREN ZUR HERSTELLUNG EINER SOLCHEN PLATTE UND DEREN VERWENDUNG
PLATE OF THERMOPLASTIC MATERIAL WITH IMPROVED OPTICAL PROPERTIES, PROCESS FOR THE MANUFACTURE OF SUCH A PLATE AND USE THEREOF

(30) Priorité: 30.09.2009 FR 0956788
(43) Date de publication de la demande: 08.08.2012
(73) Titulaire: DS Smith Kaysersberg, 68240 Kaysersberg (FR)
(72) Inventeur: MEYER, Thierry, F-68230 Wihr-au-Val (FR); SCHMIDT-MORGENROTH, Edouard, F-68190 Labaroche (FR); KLINGER, Yves, F-67600 Muttersholtz (FR)
(74) Mandataire: Gevers France
(86) Numéro de dépôt international: PCT/EP2010/064551
(87) Numéro de publication internationale: WO 2011/039303

(56) Documents cités:
- EP-A1- 2 025 505
- EP-A2- 0 388 086
- EP-A2- 1 306 721
- US-A- 5 552 011

## Description

La présente invention concerne le domaine des feuilles ou plaques en matériau plastique destinées à des applications où les caractéristiques optiques sont importantes telles que des plaques destinées à recevoir une impression notamment par sérigraphie ou bien numérique ou bien des pièces d'aspect dans le domaine automobile.

L'invention concerne plus particulièrement une plaque alvéolaire en matériau thermoplastique, notamment une polyoléfine composée de deux couches externes reliées par une couche centrale constituée d'une feuille thermoformée avec des bossages en forme par exemple de cylindres répartis selon un motif régulier en réseau par exemple hexagonal. La conformation particulière de la couche centrale confère à l'ensemble ses propriétés mécaniques, telle que la résistance à la charge ainsi que ses caractéristiques fonctionnelles. Un procédé de fabrication d'une telle plaque, dite à structure à bulles, est décrit dans le brevet WO 2005/105436.

Dans le cadre de l'impression sérigraphique et numérique, on trouve les supports suivants :
- Plaques en PVC expansé présentant l'avantage d'avoir un aspect lisse, une très bonne opacité ainsi qu'une résistance au feu. Elles présentent cependant les inconvénients principaux d'être de coût élevé, d'avoir une masse volumique relativement élevée et une sensibilité à la rayure.
- Plaques en polypropylène alvéolaire double paroi obtenues par extrusion à travers une filière spécifique suivie d'un calibrage. Deux ou une pluralité de parois planes, parallèles sont reliées entre elles par des entretoises longitudinales, ménageant des alvéoles dans le sens de la longueur avec la paroi. Ces plaques ont pour avantage une masse volumique faible, une rigidité élevée dans le sens des entretoises ainsi qu'un coût nettement inférieur à celui du PVC. L'inconvénient principal de ce produit est lié aux retassures à la jonction de l'entretoise et des couches supérieures et inférieures. Ces retassures donnent une surface ayant une certaine rugosité. D'autre part lorsque la plaque imprimée est placée devant une source lumineuse (par exemple dans le cas d'affiches suspendues), les entretoises verticales sont visibles par transparence, d'où un effet de ligne préjudiciable au rendu de l'impression.
- Plaques pleines en polypropylène avec pour avantage un aspect homogène une bonne imprimabilité et pour inconvénient, une rigidité plus faible qu'une plaque alvéolaire à masse surfacique équivalente.
- Plaques du type à structure à bulles mentionné ci-dessus, en polypropylène et décrites dans la demande de brevet FR08161121.2, qui peuvent remplacer avantageusement les supports en PVC expansé grâce à un bon compromis entre les propriétés de rigidité et d'opacité et un gain de poids de 30 à 50 % par rapport au PVC.

Le principal inconvénient de ces dernières plaques réside dans le fait que la couche centrale peut être visible en transparence lorsque la plaque est placée devant une source lumineuse bien que celle-ci comprenne un quantité a priori suffisante d'agent opacifiant. Il a été observé aussi que les bulles pouvaient, sur un matériel décrit par la demande de brevet FR08161121.2, ressortir par effet optique lors d'une impression digitale ou sérigraphique dès lors que la couche d'encre déposée était suffisamment fine. Ces phénomènes s'observent principalement dans le cas des masses surfaciques faibles où l'épaisseur des parois planes est relativement faible.

Il est à noter qu'augmenter le taux d'agent opacifiant dans la plaque ne résout pas le problème ; les résultats son limités par la faible épaisseur des couches externes et par ailleurs un taux excessif la fragilise et a un effet défavorable sur l'extrusion. En outre le coût de ces agents est élevé.

La présente invention vise à résoudre ces problèmes optiques dans les plaques dites à bulles aussi bien dans le domaine de l'impression que plus généralement dans le domaine des plaques dans lesquelles on a incorporé un agent colorant.

On parvient à résoudre ce problème avec, conformément à l'invention, une plaque en matériau thermoplastique comprenant deux feuilles planes externes et une feuille centrale thermoformée avec des bossages sur au moins une face, liée aux deux feuilles planes, la plaque incorporant un agent colorant en quantité suffisante pour la rendre opaque, caractérisée par le fait que l'agent colorant est incorporé pour 80 à 100 % dans les deux feuilles planes externes, lesdites deux feuilles étant opaques et au plus pour 20 % dans la feuille centrale thermoformée, la feuille centrale étant translucide.

En répartissant l'agent colorant de manière à rendre la couche centrale invisible, on obtient une plaque d'aspect semblable à celle d'une plaque pleine homogène tout en conservant à la fois ses propriétés mécaniques, avec une rigidité nettement supérieure à masse surfacique équivalente, et une bonne résistance à l'impact du fait de l'effet amortissant de la structure interne et de faible masse volumique, inférieure à 0,4 g/cm3.

Dans le cas de l'impression, l'utilisation d'une matière translucide voire transparente en couche interne supprime la perception des bulles par transmission lumineuse ainsi que les problèmes d'aspect après impression sans qu'il soit nécessaire d'utiliser ces opacifiants particuliers.

L'agent colorant est le dioxyde de titane (Ti02) celui-ci a également un effet opacifiant. Cet effet peut-être amplifié par l'ajout de poudre d'aluminium. Plus particulièrement la plaque comprend de 2 à 5% de Ti02.

Conformément à une autre caractéristique, la plaque en matériau thermoplastique comprend un agent rigidifiant, tel que le talc.

L'invention concerne avantageusement un matériau thermoplastique à base de polyoléfine, notamment de polypropylène. Plus particulièrement, le matériau thermoplastique comprend de 30 à 90% de polypropylène copolymère, préférentiellement 40-80% de polypropylène copolymère, et 50% de polypropylène homopolymère. Le polypropylène copolymère peut être séquencé ou statistique.

Le grammage de la plaque de l'invention est compris entre 150g/m² et 4000g/m², de préférence entre 400g/m² et 2000g/m² et plus particulièrement entre 450g/m² et 900g/m². La plaque a une épaisseur comprise entre 1 et 12 mm, de préférence comprise entre 2 et 10 mm. Les bossages sont cylindriques ou en forme de dôme, notamment à section circulaire, ovale ou polygonale. Ils ont un diamètre compris entre 3 et 18 mm, de préférence entre 4 et 14 mm.

L'invention porte également sur un procédé de fabrication d'une plaque. Il est caractérisé par le fait que les feuilles externes sont formées par extrusion d'un mélange d'extrusion comprenant :
30 à 90 % de polypropylène copolymère ayant un indice de fluidité à 230°C - 2,16 kg compris entre 1 et 12 g/10 min. Préférentiellement 40-80% de polypropylène copolymère ayant un indice de fluidité compris entre 3 et 8 g/10 min,
0 à 50 % de polypropylène homopolymère ayant un indice de fluidité à 230°C - 2,16 kg compris entre 1 et 12 g/10 min ; préférentiellement 5-30 % de polypropylène homopolymère ayant un indice de fluidité compris entre 3 et 8 g/10 min,
1 à 10 % d'un mélange maître contenant un agent colorant,
5 à 30 % d'un mélange maître contenant un agent rigidifiant,
0 à 5 % d'un mélange maître anti UV,
0 à 20 % de mélange maître ignifugeant, de préférence 2 à 15 %, contenant de 40 à 90 % de substances actives, de préférence 60 à 80 %.

Le mélange d'extrusion comprend de préférence :
5 à 30 % d'un mélange maître contenant un agent rigidifiant avec 40-80 % de talc et 0-20 % de carbonate de calcium, préférentiellement 5 à 20 % de mélange maître avec 50-80 % de talc et 0-10 % de carbonate de calcium,
1 à 10 % d'un mélange maître colorant blanc avec 50-80 % de dioxyde de titane, préférentiellement 2 à 6 % de mélange maître colorant blanc contenant 60 à 75 % de dioxyde de titane,
0 à 5 % de mélange maître anti UV contenant 10-30 % d'amine à encombrement stérique (HALS),

Pour ce qui concerne la couche centrale, celle-ci est formée par extrusion d'un mélange d'extrusion comprenant :
30à 100 % de polypropylène copolymère ayant un indice de fluidité à 230°C - 2,16 kg compris entre 1 et 12 g/10 min, préférentiellement 60-90% de polypropylène copolymère ayant un indice de fluidité compris entre 3 et 8 g/10 min,
0 à 70 % de polypropylène homopolymère ayant un indice de fluidité à 230°C - 2,16 kg compris entre 1 et 12 g/10 min, préférentiellement 5-50 % de polypropylène homopolymère ayant un indice de fluidité compris entre 3 et 8 g/10 mn,
0 à 20 % de mélange maître comprenant 40-80 % de talc et 0-20% de carbonate de calcium ; préférentiellement 5 à 10 % de mélange maître comprenant 50-80% de talc et 0-10% de carbonate de calcium,
0 à 20% de mélange maître ignifugeant, de préférence 2 à 15%, contenant de 40 à 90% de substances actives, de préférence 60 à 80%.

La présente demande vise à couvrir également l'utilisation d'une plaque en tant que plaque support d'impression sérigraphique ou numérique ou encore comme plaque dite d'aspect dans le domaine automobile.

D'autres avantages et caractéristiques sont présentés avec la description qui suit de la plaque et du procédé selon l'invention se référant à la figure unique annexée représentant un exemple de feuille à structure à bulles,

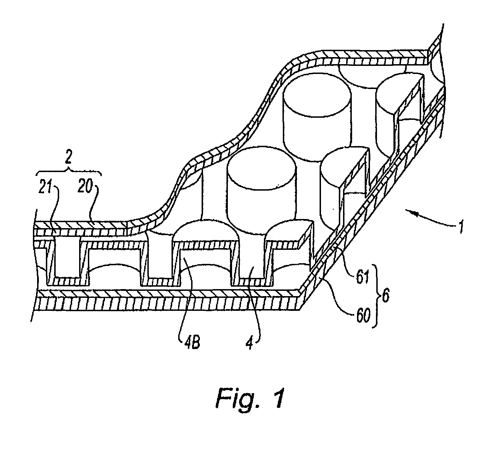

La structure de feuille ou plaque à bulles de la figure 1 est composée de trois couches 2, 4, 6. Une couche centrale 4 prise en sandwich entre deux couches 2 et 6 externes de couverture, une couche 6, ici sur la figure, inférieure et une couche supérieure. Ces dernières sont planes et liées par une face à la couche centrale. La couche 4 est gaufrée et présente des bossages 4B selon un motif répétitif de préférence régulier. Les couches sont représentées de même épaisseur mais elles peuvent être différentes. Les bossages sont ici cylindriques droits à section, parallèle à la couche inférieure, circulaire, ovale ou autre. Les bossages sont répartis de façon hexagonale sur la couche 4 leur nombre variant en fonction de leur diamètre. Par exemple la densité de bossages par m² varie entre 30 000 et 40 000 pour des bossages cylindriques de 4 mm de diamètre et entre 10000 et 20000 pour des bossages de 8 mm de diamètre. La hauteur de bossages est variable et dépend du diamètre de ces derniers, la hauteur étant par exemple de 2,6 mm pour un diamètre de 4 mm et de 4,5 mm pour un diamètre de 8 mm. Selon d'autres formes de réalisation non représentées, les bossages sont tronconiques ou en forme de dôme.

De préférence, la couche centrale 4 présente des bossages 4B s'étendant sur un seul côté mais la couche centrale peut être gaufrée différemment selon un motif symétrique par exemple.

La couche inférieure 6 est constituée d'une couche 60 liée à la couche centrale par un liant approprié 61. Ce liant peut être un matériau à activation thermique.

La couche supérieure 2 est constituée d'une couche 20 liée à la couche centrale par le sommet des bossages 4B de cette dernière par un liant approprié 21. Comme pour la couche inférieure ce liant peut être un matériau à activation thermique. Sur cet exemple la couche 4 est simple mais elle peut aussi comprendre une couche 40 revêtue de couches de liant ; ces dernières participent à la liaison avec les couches supérieure et inférieure.

Un procédé de fabrication convenant à la réalisation de la plaque à bulles est décrit dans la demande de brevet WO 2005/105436. Le mélange de matière thermoplastique pour chacune des feuilles est extrudé au travers de têtes d'extrusion qui délivrent trois films. Immédiatement en aval des têtes d'extrusion, les films sont calandrée entre des cylindres de calandrage de façon à calibrer leur épaisseur et à assurer un état des surfaces extérieures tel que souhaité. Le procédé comprend ensuite globalement les étapes de calandrage des trois films. Un des films est thermoformé sur un cylindre de gaufrage présentant des reliefs correspondant aux bossages à obtenir. Les trois couches sont ensuite assemblées par soudage pour former la plaque. Un liant coextrudé sur chacune des couches permet de réaliser la soudure sans ramollir la structure des films.

Les plaques ainsi réalisées sont caractérisées pour les applications envisagées :
- par un poids par m² compris entre 150 g/m² et 4000 kg/m², de façon préférentielle entre 400 et 2000 g/m² et plus particulièrement entre 450 et 900g/m²,
- par une épaisseur comprise entre 1 à 20 mm et de façon préférentielle 2.0 à 10 mm,
- par un diamètre de bulle de 3 à 18 mm et de façon préférentielle 4 à 14 mm,
- une masse volumique inférieure à 0,4 g/cm³.

Conformément à l'invention, on a réparti l'agent colorant ici un agent opacifiant entre les deux couches externes, la couche centrale n'en comprenant pas.

Conformément à un mode préféré de réalisation pour une application comme plaque d'impression, la composition des mélanges de matériaux d'extrusion des couches externes contient :
- 30 à 90% de polypropylène copolymère ayant un indice de fluidité à 230°C - 2,16 kg compris entre 1 et 12 g/10 min. Préférentiellement 40-80% de polypropylène copolymère ayant un indice de fluidité compris entre 3 et 8 g/10 min,
- 0 à 70% de polypropylène homopolymère ayant un indice de fluidité à 230°C - 2,16 kg compris entre 1 et 12 g/10 min. Préférentiellement 5-50% de polypropylène homopolymère ayant un indice de fluidité compris entre 3 et 8 g/10 mn,
- 5 à 30 % de mélange maître comprenant 40-80% de talc et 0-20% de carbonate de calcium. Préférentiellement 5 à 20 % de mélange maître comprenant 50-80 % de talc et 0-10 % de carbonate de calcium,
- 1 à 10 % de mélange maître colorant blanc contenant 50-80% de dioxyde de titane ; préférentiellement 2 à 6% de mélange maître colorant blanc contenant 60 à 75 % de dioxyde de titane,
- 0 à 5% de mélange maître anti UV contenant 10-30% d'amine à encombrement stérique (HALS). Préférentiellement 0 à 5% de mélange maître anti UV contenant 10-30% d'amine à encombrement stérique (HALS),
   0 à 20% de mélange maître ignifugeant, de préférence 2 à 15 %, contenant de 40 à 90% de substances actives, de préférence 60 à 80 %.

La composition du matériau d'extrusion pour la couche centrale contient :
- 30 à 100% de polypropylène copolymère ayant un indice de fluidité à 230°C - 2,16 kg compris entre 1 et 12 g/10 min. Préférentiellement 60-90% de polypropylène copolymère ayant un indice de fluidité compris entre 3 et 8 g/10 min,
- 0 à 70% de polypropylène homopolymère ayant un indice de fluidité à 230°C - 2.16 kg compris entre 1 et 12 g/10 min. Préférentiellement 5-50% de polypropylène homopolymère ayant un indice de fluidité compris entre 3 et 8 g/10 min,
- 0 à 20 % de mélange maître comprenant 40-80% de talc et 0-20% de carbonate de calcium ; préférentiellement 5 à 10 % de mélange maître comprenant 50-80% de talc et 0-10% de carbonate de calcium,
- 0 à 20% de mélange maître ignifugeant, de préférence 2 à 15%, contenant de 40 à 90 % de substances actives, de préférence 60 à 80 %.

La répartition des différentes couches est commandée par le débit matière:
Le débit de matière de la couche supérieure représente 20-50% du débit total, préférentiellement 30-45%.
Le débit de matière de la couche centrale représente 15-50% du débit total, préférentiellement 20-40%.
Le débit de matière de la couche inférieure représente 20-50% du débit total, préférentiellement 30-45%.

Les couches sont soudées entre-elles grâce à un liant coextrudé constitué de polypropylène terpolymère ayant un indice de fluidité à 230°C - 2,16 kg compris entre 1 et 15 g/10 min. Préférentiellement entre 3 et 10 g/10 min.

On a réalisé deux plaques selon l'invention.

### ● Exemple 1 :

Plaque ayant une masse au m² de 600 g.

Diamètre de bulle de 4 mm.

Composition des couches externes :
65 % PP copolymère bloc (Indice de fluidité = 3.5 g/10 min)
10 % PP homopolymère (Indice de fluidité = 5g/10 min)
20 % Mélange maître comprenant 60% de talc.
5 % Mélange maître blanc comprenant 75% de dioxyde de titane.

Composition de la couche centrale :
100 % PP copolymère bloc (Indice de fluidité = 3.5 g/10 min).

Répartition des couches en poids :
Couche supérieure/couche centrale/couche inférieure = 38/22/40

### ● Exemple 2 :

Plaque ayant une masse au m² de 900 g.
Diamètre de bulle 4 mm.

Composition des couches externes :
62 % PP copolymère bloc (Indice de fluidité = 3.5 g/10 min),
10 % PP homopolymère (Indice de fluidité = 5g/10 min),
20 % Mélange maître comprenant 60% de talc,
6% Mélange maître blanc contenant 60% de dioxyde de titane,
2% Mélange maître anti UV contenant 20% de HALS.

Composition de la couche centrale :
100 % PP copolymère bloc (Indice de fluidité = 3.5 g/10 min)

Répartition des couches en poids :
Couche supérieure/couche centrale/couche inférieure = 36/22/42.

### Propriétés :

On a mesuré les propriétés des deux plaques ci-dessus et on les a comparées à celles de plaques de l'art antérieur : Une plaque à bulles standard, une plaque alvéolaire à double paroi et une plaque pleine.

Mesures de transmission lumineuse selon la norme DIN 5036 - ASTM D 1003 - 61

| | **Exemple 1** | Plaque à bulles standard | Plaque double paroi | Plaque pleine |
|---|---|---|---|---|
| Epaisseur (mm) | 2.6 | 2.6 | 3.5 | 0.6 |
| Masse au m² (g) | 600 | 600 | 600 | 590 |
| Masse volumique (g/cm3) | 0.23 | 0.23 | 0.17 | 0.98 |
| Composition | | PP copo 70.3 PP Homo 10 PP +Talc 16.4 MM colorant 3.3 | PP copo 56.7 PP Homo 20 PP +Talc 20 MM colorant 3.3 | PP copo 94 MM colorant 6 |
| | | Répartition : 36/30/34 | | |
| Taux global de pigment blanc (Dioxyde de titane) (%) | 2.9 | 2.5 | 2.5 | 4.5 |
| Taux global de charge minérale (Talc) (%) | 9.4 | 9.8 | 12.0 | 0 |
| Transmission lumineuse (%) | 5.8 | 7.2 | 10.3 | 6.6 |

| | **Exemple 2** | Plaque à bulle standard | Plaque pleine |
|---|---|---|---|
| Epaisseur (mm) | 3.0 | 3.2 | 1.0 |
| Masse au m² (g) | 900 | 900 | 960 |
| Masse volumique (g/cm3) | 0.30 | 0.28 | 0.96 |
| Composition | | PP copo 70.3 PP Homo 10.0 PP+Talc1 10.0 MM colorant 6.0 | PP copo 95 MM colorant 5 |
| | | Répartition : 38/27/35 | |
| Taux global de pigment blanc (Dioxyde de titane) (%) | 2.8 | 3.6 | 3.0 |
| Taux global de charge minérale (Talc) (%) | 9.4 | 6.0 | 0 |
| Transmission lumineuse (%) | 1.6 | 2.4 | 4.7 |

On obtient une opacité supérieure à celle des autres produits tout en ayant un taux de colorant équivalent voire inférieur.

Mesure de rigidité selon la norme ISO 178 (*) :

| | **Exemple 1** | Plaque pleine | **Exemple 2** | Plaque pleine |
|---|---|---|---|---|
| Epaisseur (mm) | 2.6 | 0.6 | 3.0 | 1.0 |
| Masse au m² (g) | 600 | 590 | 900 | 960 |
| Masse volumique (g/cm3) | 0.23 | 0.98 | 0.30 | 0.96 |
| Rigidité en flexion (N/mm) | 1.75 | 0.04 | 3.50 | 0.21 |
| Rupture en flexion (N) | 7.4 | 0.75 | 26.1 | 4.3 |

| | | | | |
|---|---|---|---|---|
| (*) : Dimensions des éprouvettes : 150*⁴⁰ mm, distance entre appuis : 100 mm, vitesse de test : 5 mm/mn (rigidité) et 300 mm/mn (rupture). | | | | |

### Résistance à l'impact :

Teste : détermination de la hauteur de casse lors de la chute d'un dard cylindrique (diamètre 16 mm- masse : 370 g) sur un échantillon placé sur un support cylindrique (diamètre 220 mm, hauteur 100 mm)

| | **Exemple 1** | Plaque à bulle standard | Plaque double paroi |
|---|---|---|---|
| Epaisseur (mm) | 2.6 | 3.2 | 3.5 |
| Masse au m² (g) | 600 | 900 | 600 |
| Masse volumique (g/cm3) | 0.23 | 0.28 | 0.17 |
| Hauteur de casse à 23°C (cm) | 110 | 60 | 50 |

## Revendications

1. Plaque en matériau thermoplastique comprenant deux feuilles planes externes et une feuille centrale thermoformée avec des bossages sur au moins une face, liée aux deux feuilles planes, la plaque incorporant un agent colorant en quantité suffisante pour la rendre opaque, **caractérisée par le fait que** l'agent colorant est incorporé pour 80 à 100 % dans les deux feuilles planes externes, les deux feuilles externes étant opaques et au plus pour 20% dans la feuille centrale thermoformée, la feuille centrale étant translucide.

2. Plaque en matériau thermoplastique selon la revendication précédente dont l'agent colorant est un agent avec un effet opacifiant tel que Ti02 ou Ti02 avec ajout d'aluminium.

3. Plaque en matériau thermoplastique selon la revendication précédente comprenant de 2 à 5 % de Ti02.

4. Plaque en matériau thermoplastique selon l'une des revendications précédentes comprenant un agent rigidifiant, tel que le talc.

5. Plaque en matériau thermoplastique selon l'une des revendications précédentes dont le matériau thermoplastique est à base de polyoléfine, notamment de polypropylène.

6. Plaque en matériau thermoplastique selon la revendication précédente dont le matériau thermoplastique comprend de 30 à 90 % de polypropylène copolymère, préférentiellement 40-80 % de polypropylène copolymère, et 50 % de polypropylène homopolymère.

7. Plaque en matériau thermoplastique selon l'une des revendications précédentes dont le grammage est compris entre 400g/m² et 2000g/m² et plus particulièrement entre 450g/m² et 900g/m².

8. plaque en matériau thermoplastique selon l'une des revendications précédentes dont la masse volumique est inférieure à 0,4g/cm³.

9. Plaque en matériau thermoplastique selon l'une des revendications précédentes dont les bossages sont cylindriques ou en forme de dôme, notamment à section circulaire, ovale ou polygonale.

10. Procédé de fabrication d'une plaque selon l'une des revendications précédentes **caractérisé par le fait que** les feuilles externes sont formées par extrusion d'un mélange d'extrusion comprenant :
30 à 90 % de polypropylène copolymère ayant un indice de fluidité à 230°C - 2.16 kg compris entre 1 et 12 g/10 min. Préférentiellement 40-80 % de polypropylène copolymère ayant un indice de fluidité compris entre 3 et 8 g/10 min,
0 à 70% de polypropylène homopolymère ayant un indice de fluidité à 230°C - 2.16 kg compris entre 1 et 12 g/10 min. Préférentiellement 5-50% de polypropylène homopolymère ayant un indice de fluidité compris entre 3 et 8 g/10 min,
1 à 10 % d'un mélange maître contenant un agent colorant,
5 à 30 % d'un mélange maître contenant un agent rigidifiant,
0 à 5 % d'un mélange maître anti UV,
0 à 20 % de mélange maître ignifugeant.

11. Procédé selon la revendication précédente pour la fabrication d'une plaque d'impression selon lequel le mélange d'extrusion comprend :
5 à 30 % d'un mélange maître contenant un agent rigidifiant avec 40-80% de talc et 0-20 % de carbonate de calcium, préférentiellement 5 à 20 % de mélange maître avec 50-80 % de talc et 0-10% de carbonate de calcium,
1 à 10 % d'un mélange maître colorant blanc avec 50-80 % de dioxyde de titane, préférentiellement 2 à 6 % de mélange maître colorant blanc contenant 60 à 75 % de dioxyde de titane,
0 à 5 % de mélange maître anti UV contenant 10-30 % d'amine à encombrement stérique (HALS),

12. Procédé selon l'une des revendications 10 et 11 selon lequel la couche centrale est formée par extrusion d'un mélange d'extrusion comprenant :
30à 100 % de polypropylène copolymère ayant un indice de fluidité à 230°C - 2,16 kg compris entre 1 et 12 g/10 min, préférentiellement 60-90 % de polypropylène copolymère ayant un indice de fluidité compris entre 3 et 8 g/10 min,
0 à 70% de polypropylène homopolymère ayant un indice de fluidité à 230°C - 2,16 kg compris entre 1 et 12 g/10 min, préférentiellement 5-50 % de polypropylène homopolymère ayant un indice de fluidité compris entre 3 et 8 g/10 min,
0 à 20 % de mélange maître comprenant 40-80 % de talc et 0-20 % de carbonate de calcium ; préférentiellement 5 à 10 % de mélange maître comprenant 50-80 % de talc et 0-10 % de carbonate de calcium.

13. Utilisation d'une plaque selon l'une des revendications 1 à 9 ou obtenue selon le procédé d'une revendication 10 à 12 en tant que plaque support d'impression sérigraphique ou numérique.

14. Utilisation d'une plaque selon l'une des revendications 1 à 9 comme plaque dite d'aspect dans le domaine automobile.

## Patentansprüche

1. Platte aus thermoplastischem Material, die zwei äußere ebene Blätter und ein zentrales thermogeformtes Blatt mit Bossen auf wenigstens einer Fläche, die mit den beiden ebenen Blättern verbunden ist, umfasst, wobei die Platte einen Farbstoff in ausreichender Menge umfasst, um sie undurchsichtig zu machen, **dadurch gekennzeichnet, dass** der Farbstoff zu 80 bis 100 % in die beiden äußeren ebenen Blätter eingearbeitet ist, wobei die beiden äußeren Blätter undurchsichtig sind und zudem zu 20 % in das zentrale thermogeformte Blatt, wobei das zentrale Blatt durchsichtig ist.

2. Platte aus thermoplastischem Material nach dem vorherigen Anspruch, wobei der Farbstoff ein Stoff mit einem undurchsichtig machenden Effekt ist, wie etwa TiO₂ oder TiO₂ mit zugefügtem Aluminium.

3. Platte aus thermoplastischem Material nach dem vorherigen Anspruch, die 2 bis 5 % TiO₂ umfasst.

4. Platte aus thermoplastischem Material nach einem der vorherigen Ansprüche, die ein Versteifungsmittel enthält, wie etwa Talk.

5. Platte aus thermoplastischem Material nach einem der vorherigen Ansprüche, wobei das thermoplastische Material auf Polyolefinbasis ist, insbesondere von Polypropylen.

6. Platte aus thermoplastischem Material nach dem vorherigen Anspruch, wobei das thermoplastische Material 30 bis 90 % Polypropylencopolymer, vorzugsweise 40 - 80 % Polypropylencopolymer sowie 50 % Polypropylenhomopolymer umfasst.

7. Platte aus thermoplastischem Material nach einem der vorherigen Ansprüche, wobei das Flächengewicht zwischen 400 g/m² und 2000 g/m² und insbesondere zwischen 450 g/m² und 900 g/m² beträgt.

8. Platte aus thermoplastischem Material nach einem der vorherigen Ansprüche, wobei die Volumenmasse weniger als 0,4 g/cm³ beträgt.

9. Platte aus thermoplastischem Material nach einem der vorherigen Ansprüche, wobei die Bossen zylindrisch oder kuppelförmig sind, insbesondere mit kreisförmigem, ovalem oder polygonalem Querschnitt.

10. Verfahren zur Herstellung einer Platte aus thermoplastischem Material nach einem der vorherigen Ansprüche, **dadurch gekennzeichnet, dass** die äußeren Blätter durch Extrusion eines Extrusionsgemischs gebildet werden, welches umfasst:
30 bis 90 % Polypropylencopolymer, das einen Fließindex bei 230 °C - 2,16 kg zwischen 1 und 12 g/10 min aufweist, vorzugsweise weisen 40-80 % des Polypropylencopolymers einen Fließindex zwischen 3 und 8 g/10 min auf,
0 bis 70 % Polypropylenhomopolymer, das einen Fließindex bei 230 °C - 2,16 kg zwischen 1 und 12 g/10 min aufweist, vorzugsweise weisen 5-50 % des Polypropylenhomopolymers einen Fließindex zwischen 3 und 8 g/10 min auf,
1 bis 10 % eines Masterbatch, der einen Farbstoff enthält,
5 bis 30 % eines Masterbatch, der ein Versteifungsmittel enthält,
0 bis 5 % eines Anti-UV Masterbatch,
0 bis 20 % eines flammenhemmenden Masterbatch.

11. Verfahren nach dem vorherigen Anspruch zur Herstellung einer Druckplatte, wobei das Extrusionsgemisch umfasst:
5 bis 30 % eines Masterbatch, der ein Versteifungsmittel mit 40-80 % Talk und 0-20 % Calciumcarbonat enthält, vorzugsweise 5 bis 20 % eines Masterbatch mit 50-80 % Talk und 0-10 % Calciumcarbonat,
1 bis 10 % eines Masterbatch eines weißen Farbstoffs mit 50-80 % Titandioxid, vorzugsweise 2 bis 6 % eines Masterbatch eines weißen Farbstoffs, der 60 bis 75 % Titandioxid enthält,
0 bis 5 % eines Anti-UV Masterbatch, der 10-30 % sterisch gehindertes Amin (HALS) enthält.

12. Verfahren nach einem der Ansprüche 10 und 11, wobei die zentrale Schicht durch Extrusion eines Extrusionsgemischs gebildet wird, welches umfasst:
30 bis 100 % Polypropylencopolymer, das einen Fließindex bei 230 °C - 2,16 kg zwischen 1 und 12 g/10 min aufweist, vorzugsweise weisen 60-90 % des Polypropylencopolymers einen Fließindex zwischen 3 und 8 g/10 min auf,
0 bis 70 % Polypropylenhomopolymer, das einen Fließindex bei 230 °C - 2,16 kg zwischen 1 und 12 g/10 min aufweist, vorzugsweise weisen 5-50 % des Polypropylenhomopolymers einen Fließindex zwischen 3 und 8 g/10 min auf,
0 bis 20 % eines Masterbatch, der 40-80 % Talk und 0-20 % Calciumcarbonat enthält, vorzugsweise 5 bis 10 % des Masterbatch, der 50-80 % Talk und 0-10 % Calciumcarbonat umfasst.

13. Verwendung einer Platte nach einem der Ansprüche 1 bis 9 oder erhalten nach dem Verfahren eines der Ansprüche 10 bis 12 als Trägerplatte für Siebdruck oder digitalen Druck.

14. Verwendung einer Platte nach einem der Ansprüche 1 bis 9 als Aspektplatte in der Automobilbranche.

## Claims

1. A plate made in a thermoplastic material comprising two external planar sheets and a central thermoformed sheet with bosses on at least one side, connected to the two planar sheets, the plate incorporating a colouring agent in an amount sufficient for making it opaque, **characterized in that** the colouring agent is incorporated at a rate of 80 to 100% into the two external planar sheets, the two external sheets being opaque and at the most for 20% in the central thermoformed sheet, the central sheet being translucent.

2. A plate made in a thermoplastic material according to the preceding claim, wherein the colouring agent is an agent with an opacifying effect such as TiO₂ or TiO₂ with addition of aluminium.

3. A plate made in a thermoplastic material according to the preceding claim comprising from 2 to 5% TiO₂.

4. A plate made in a thermoplastic material according to any of preceding claims comprising a stiffening agent, such as talc.

5. A plate made in a thermoplastic material according to any of preceding claims, wherein the thermoplastic material is based on a polyolefin, including polypropylene.

6. A plate made in a thermoplastic material according to the preceding claim, wherein the thermoplastic material comprises from 30 to 90% of a polypropylene copolymer, preferably 40-80% of a polypropylene copolymer, and 50% of a polypropylene homopolymer.

7. A plate made in a thermoplastic material according to any of preceding claims, wherein the substance ranges between 400 g/m² and 2000 g/m² and more particularly between 450 g/m² and 900 g/m².

8. A plate made in a thermoplastic material according to any of preceding claims, wherein the density is lower than 0.4 g/cm³.

9. A plate made in a thermoplastic material according to any of preceding claims, wherein the bosses are cylindrical or have the shape of a dome, especially with a circular, oval or polygonal section.

10. A method for manufacturing a plate according to any of preceding claims, **characterized in that** the external sheets are formed through extruding an extrusion mixture comprising:
from 30 to 90% of a polypropylene copolymer having a melt flow index at 230°C - 2.16 kg ranging between 1 and 12 g/10 min, preferably 40-80% of a polypropylene copolymer having a melt flow index ranging between 3 and 8 g/10 min,
from 0 to 70% of a polypropylene homopolymer having a melt flow index at 230°C - 2.16 kg ranging between 1 and 12 g/10 min, preferably 5-50% of a polypropylene homopolymer having a melt flow index ranging between 3 and 8 g/10 min,
from 1 to 10% of a master batch containing a colouring agent,
from 5 to 30% of a master batch containing a stiffening agent,
from 0 to 5% of an anti UV master batch,
from 0 to 20% of a fireproof master batch.

11. A method according to the preceding claim for manufacturing a printing plate, wherein the extrusion mixture comprises:
from 5 to 30% of a master batch containing a stiffening agent with 40-80% talc and 0-20% calcium carbonate, preferably from 5 to 20% of a master batch with 50-80% talc and 0-10% calcium carbonate,
from 1 to 10% of a white colouring master batch with 50-80% titanium dioxide, preferably from 2 to 6% of a white colouring master batch containing from 60 to 75% titanium dioxide,
from 0 to 5% of an anti UV master batch containing 10-30% of a sterically hindered amine (HALS).

12. A method according to any of claims 10 and 11, wherein the central layer is formed through extruding an extrusion mixture comprising:
from 30 to 100% of a polypropylene copolymer having a melt flow index at 230°C - 2,16 kg ranging between 1 and 12 g/10 min, preferably 60-90% of a polypropylene copolymer having a melt flow index ranging between 3 and 8 g/10 min,
from 0 to 70% of a polypropylene homopolymer having a melt flow index at 230°C - 2.16 kg ranging between 1 and 12 g/10 min, preferably 5-50% of a polypropylene homopolymer having a melt flow index ranging between 3 and 8 g/10 min,
0 to 20% of a master batch comprising 40-80% talc and 0-20% calcium carbonate, preferably from 5 to 10% of a master batch comprising 50-80% talc and 0-10% calcium carbonate.

13. The use of a plate according to any of claims 1 to 9 or obtained according to the method of any of claims 10 to 12 as a screen printing or digital printing medium plate.

14. The use of a plate according to any of claims 1 to 9 as an aspect plate in the automotive field.
